# EUROPÄISCHE PATENTSCHRIFT

(11) **EP 2 023 179 B1**
(45) Veröffentlichungstag und Bekanntmachung des Hinweises auf die Patenterteilung: **04.05.2016**
(21) Anmeldenummer: 08013046.1
(22) Anmeldetag: 19.07.2008
(51) Int. Cl.: F41G 7/22, G02B 23/02, G03B 5/00, G02B 26/08

(54) **Optische Schwenkeinrichtung**
Optical swivelling device
Dispositif de pivotement optique

(30) Priorität: 28.07.2007 DE 102007035552
(43) Veröffentlichungstag der Anmeldung: 11.02.2009
(73) Patentinhaber: Diehl BGT Defence GmbH & Co. KG, 88662 Überlingen (DE)
(72) Erfinder: Kempas, Hagen, 88662 Überlingen (DE)
(74) Vertreter: Diehl Patentabteilung

(56) Entgegenhaltungen:
- DE-A1- 10 135 222
- GB-A- 2 322 437
- US-A- 5 262 630
- US-A- 6 064 505
- US-B1- 7 236 299

## Beschreibung

Die Erfindung betrifft eine optische Schwenkeinrichtung zur Abbildung und/oder Projektion einer Objektszene. Die Schwenkeinrichtung soll es ermöglichen, innerhalb eines großen Raumwinkelbereiches den optischen Pfad eines Aufnahme- oder Projektionsgerätes zu positionieren, so dass ein vergleichsweise kleiner Teil des Raumwinkelbereiches erfasst werden kann bzw. innerhalb dieses kleinen Teils eine Projektion möglich ist.

Eine derartige Schwenkeinrichtung ist für verschiedenste Anwendungsfälle einsetzbar. So können damit Architekturaufnahmen, beispielsweise von Kircheninnenräumen oder dergleichen, erstellt, große Räume wie Höhlensysteme insbesondere mittels Laserentfernungsmessung kartographisch erfasst werden, oder Aufnahmen sowie Filme in bestimmte Raumwinkelbereiche projiziert werden. Ebenfalls ist eine derartige Schwenkeinrichtung als eine Überwachungs- oder Sucheinrichtung sowohl im sichtbaren als auch im nicht sichtbaren Spektralbereich einsetzbar und eignet sich umgekehrt aber auch als ein 3D-Zielsimulator mit einer hoch aufgelösten Zielprojektionsdarstellung. Insbesondere ist eine solche Schwenkeinrichtung auch zur Zielerfassung in einem Suchkopf eines Lenkflugkörpers einsetzbar. Insbesondere kann die Schwenkeinrichtung zur Überwachung von großen Räumen oder Plätzen im zivilen Bereich als eine Anti-Terror-Maßnahme eingesetzt werden.

Aus der US 7 236 299 B1 ist ein kompakt bauendes Periskop bekannt, bei welchem eine Risley-Prisma-Anordnung zum Einsatz kommt. Diese Anordnung ist sowohl um eine Rotationsachse als auch um eine weitere Azimut-Rotationsachse drehbar, wobei vorgesehen ist, dass sich diese beiden Achsen unter einem Winkel schneiden.

Zu Erfassung eines kleinen Ausschnitts innerhalb eines großen Gesichtsfeldes oder Raumwinkelbereiches ist aus der DE 101 35 222 A1 eine optische Schwenkeinrichtung bekannt, die in einem um eine Rollachse drehbaren Rollrahmen einen um eine Nickachse drehbaren Nickrahmen umfasst, wobei sich die Nickachse und die Rollachse unter einem Winkel von 90° schneiden. Im Nickrahmen ist eine erste Umlenkoptik angeordnet, durch welche der Abbildungsstrahlengang in Richtung entlang der Nickachse umlenkbar ist. Im Rollrahmen ist eine zweite Umlenkoptik vorgesehen, durch welche der umgelenkte Strahlengang der ersten Umlenkoptik längst der Nickachse aufgenommen und in die Richtung der Rollachse umgelenkt wird. Ein Detektor zur Erfassung des aufgenommenen Gesichtsfeld-Ausschnitts ist auf der Rollachse angeordnet.

Mit einer solchen Schwenkeinrichtung gemäß Stand der Technik ist es möglich, mit einem strukturfesten Detektor ein großes Gesichtsfeld, d. h. einen großen Raumwinkelbereich, zu erfassen.

Es ist Aufgabe der Erfindung, eine optische Schwenkeinrichtung zur Abbildung und/oder Projektion einer Objektszene innerhalb eines großen Raumwinkelbereichs anzugeben, die eine strukturfeste Detektions-/Sendeeinheit umfasst, und die gegenüber bekannten Schwenkeinrichtungen des Standes der Technik weiter verbessert ist.

Diese Aufgabe wird erfindungsgemäß gelöst durch eine optische Schwenkeinrichtung mit
a) einer Tragstruktur,
b) einer in der Tragstruktur angeordneten Detektions-/Sendeeinheit,
c) einem Nickrahmen und einem Rollrahmen, wobei der Nickrahmen um eine Nickachse drehbar in dem Rollrahmen und der Rollrahmen um eine Rollachse drehbar in der Tragstruktur gelagert ist, wobei sich die Nickachse und die Rollachse unter einem Schnittwinkel von weniger als 90° schneiden,
d) einer in den Nickrahmen angeordneten ersten Umlenkoptik derart, dass ein entlang der Nickachse propagierender Strahl in eine objektseitige Richtung umgelenkt wird, die die Nickachse unter dem Schnittwinkel schneidet, und umgekehrt, und
e) einer zweiten in dem Rollrahmen angeordneten Umlenkoptik derart, dass ein entlang der Nickachse propagierender Strahl in Richtung entlang der Rollachse und umgekehrt umgelenkt wird, wobei
die erste und die zweite Umlenkoptik zur Umlenkung der Strahlen jeweils ein Prisma umfassen und die Prismen derart ausgebildet und angeordnet sind, dass sie jeweils eine geradzahlige Anzahl, insbesondere zwei, an Reflexionsflächen aufweisen.

Die Erfindung geht dabei in einem ersten Schritt von der Überlegung aus, dass bei der erwähnten Schwenkeinrichtung gemäß Stand der Technik der Nickrahmen gegenüber dem Rollrahmen keine vollständige Drehung ausführen kann, was zu einer gewissen Unzulänglichkeit im Erreichen gewünschter Positionen führt. Unter Umständen muss zum Erreichen einer benachbarten Position der Nickrahmen erst in die entgegengesetzte Richtung zurückbewegt und der Rollrahmen eine mehr oder weniger vollständige Umdrehung durchführen. Diese Unzulänglichkeit in der Bewegung liegt darin begründet, dass sich die Nickachse und die Rollachse unter einem Winkel von 90° schneiden. Der Nickrahmen kann insofern gegenüber dem Rollrahmen keine vollständige Umdrehung durchführen.

In einem zweiten Schritt geht die Erfindung von der Überlegung aus, dass sich Nickrahmen und Rollrahmen dann unabhängig voneinander bewegen lassen, wenn der Schnittwinkel zwischen der Nickachse und der Rollachse weniger als 90° beträgt. In diesem Fall ist - eine entsprechende Anordnung der jeweiligen Komponenenten vorausgesetzt - insbesondere eine vollständige Umdrehung des Nickrahmens gegenüber dem Rollrahmen ermöglicht.

Beträgt der Schnittwinkel zwischen Rollachse und Nickachse weniger als 90°, so ist gegenüber den Schwenkeinrichtungen gemäß Stand der Technik das Erreichen gewisser Positionen deutlich vereinfacht. Insgesamt kann ein großer Raumwinkelbereich auch rascher erfasst werden.

Die Tatsache, dass eine Drehung des Nickrahmens um eine Nickachse, die gegenüber der Rollachse einen Winkel von weniger als 90° aufweist, neben einer Änderung des Elevationswinkels auch zu einer Veränderung des Azimutwinkels führt, kann problemlos durch eine entsprechende Steuerung ausgeglichen werden.

In einer vorteilhaften, weil technisch einfach realisierbaren Variante ist die optische Schwenkeinrichtung derart ausgeführt, dass sich die Nickachse und die Rollachse unter einem Winkel von 45° schneiden. Diese Ausgestaltung ermöglicht die Abbildung oder Projektion einer Objektszene innerhalb einer kompletten Hemisphäre, so dass sowohl für zivile Überwachungen als auch zum Erkennen von Zielen in Suchköpfen ein ausreichend großer Raumwinkelbereich erfassbar ist. Durch Bewegen des Nick- und des Rollrahmens um die Nick- bzw. die Rollachse ist jede Winkelposition mit einer optischen Achse innerhalb der Hemisphäre einstellbar.

Die Umlenkung des Strahlenganges in der ersten und/oder zweiten Umlenkoptik kann grundsätzlich durch Brechung, Beugung oder Reflexion erfolgen. Bei vorliegender Verwendung von Reflexionsflächen zur Umlenkung der Strahlen können jedoch optische Komponenten geringer Baugröße eingesetzt werden, so dass sich insgesamt ein kompakter Aufbau der Schwenkeinrichtung realisieren lässt.

Gemäß der Erfindung umfassen die erste und die zweite Umlenkoptik jeweils ein Prisma. Ein Prisma, welches sich durch Begrenzungsflächen unterschiedlicher Neigung auszeichnet, bietet als ein einziges optisches Bauelement die Möglichkeit, Strahlen mittels Brechung und Reflexion gezielt umzulenken. Daneben können die Durchtrittsflächen des Prismas zusätzlich zur Beeinflussung der Abbildung wie insbesondere zu einer Aufweitung oder zu einer Fokussierung des Strahlquerschnitts ausgebildet sein. Diese Eigenschaften prädestinieren die Verwendung von Prismen in den Umlenkoptiken, um einen kompakten Aufbau realisieren zu können.

Zur Reduzierung bzw. weitgehenden Vermeidung einer Bilddrehung zwischen der Objektszene und der Detektions-/Sendeeinheit sind die Prismen entsprechend der Erfindung derart ausgebildet und angeordnet, dass sie jeweils eine geradzahlige Anzahl an Reflexionsfllächen aufweisen. Der kleinstmögliche Aufbau mittels Prismen ist dann dadurch realisiert, dass diese so ausgebildet und angeordnet sind, dass sie lediglich zwei Reflexionsflächen zur Führung des sie durchdringenden Strahls aufweisen.

In einer weiter vorteilhaften Ausgestaltung weisen die beiden Prismen jeweils eine erste und eine zweite Seitenfläche sowie eine Basisfläche auf, wobei die erste Seitenfläche zur Basisfläche um den Schnittwinkel, insbesondere um 45°, und die zweite Seitenfläche zur Basisfläche um den halben Schnittwinkel, insbesondere um 22,5°, geneigt ist, wobei die Prismen mit einer ersten Seitenfläche und mit einer Basis zueinander planparallel angeordnet sind. Mit dieser Anordnung wird insgesamt eine verzerrungsfreie Abbildung bzw. Projektion unter Verwendung von lediglich zwei Prismen erzielt, wobei die Basisfläche jeweils sowohl eine Durchtritts- als auch eine Reflexionsfläche darstellt. Ein durch die Basisfläche senkrecht in das jeweilige Prisma eintretender Strahl wird aufgrund der Neigung der zweiten Seitenfläche an dieser total reflektiert und erneut gegen die Basisfläche zurückgeworfen. An dieser wird er nun aufgrund des geänderten Einfallswinkels ebenfalls total reflektiert und rechtwinklig gegen die erste Seitenfläche geworfen, wo er ohne Reflexionsverluste austritt. Gleiches gilt sinngemäß für den umgekehrten Strahlengang. Die erste Seitenfläche und eine Basisfläche bilden die Kopplung zwischen den beide Prismen, wobei eines der Prismen dem Nickrahmen und das andere Prisma dem Rollrahmen zugeordnet ist. Eine Verdrehung der Prismen gegeneinander durch eine Drehung des Nickrahmens um die Nickachse führt zu keiner Änderung in der optischen Abbildung.

Vorteilhafterweise sind die erste und/oder die zweite Umlenkoptik zur Ausgestaltung eines reellen Zwischenbildes, insbesondere innerhalb der Prismen, ausgebildet. Durch die zweistufige Ausbildung des Strahlengangs insgesamt, wobei ein reelles Zwischenbild zwischen der Objektszene und der Detektions/Sendeeinheit erzeugt wird, wird der Strahlenquerschnitt im Bereich des Zwischenbildes minimiert. Liegt das Zwischenbild innerhalb der Prismen, so können diese, da der Strahlenquerschnitt verringert ist, in ihrer Dimension weiter verringert werden.

Da die Nickachse gegen die Rollachse um einen Winkel von weniger als 90° geneigt ist, ist es weiter möglich, den Nickrahmen strukturfest anzutreiben. Hierzu ist zweckmäßigerweise ein Verbindungsglied auf dem Nickrahmen angeordnet, in welches zum Antrieb ein strukturfestes, drehbares Koppelglied eingreift. Insbesondere kann das drehbare Koppelglied als ein koaxial zur Rollachse angeordneter Drehkranz, insbesondere als ein Zahnkranz, ausgebildet sein. Mit dieser Ausgestaltung wird es nicht mehr nötig, Zuführleitungen zum Antrieb des Nickrahmens beispielsweise mittels Schleifringen oder dgl. drehbewegbar an den Rollrahmen anzukoppeln. Auf diese Weise entfällt aufwändiger und teuerer Mehraufwand.

Bei der angegebenen Schwenkeinrichtung verläuft die optische Achse durch den Schnittpunkt der Nickachse mit der Rollachse. Aus diesem Grund ist es möglich, die Schwenkeinrichtung unter einer strukturfesten, transparenten Kuppel zu integrieren, deren Zentrum ebenfalls im genannten Schnittpunkt liegt. Dies ermöglicht eine hermetische Abdichtung gegenüber ungünstigen Umweltbedingungen.

Wie eingangs erwähnt, eignet sich die Schwenkeinrichtung prinzipiell für verschiedenste Anwendungen sowohl im zivilen als auch im wehrtechnischen Bereich. Insbesondere kann die Schwenkeinrichtung in einem Suchkopf eines Lenkflugkörpers integriert sein und der Zielerfassung dienen.

Ausführungsbeispiele der Erfindung werden anhand einer Zeichnung näher erläutert. Dabei zeigen:
- Fig. 1: in einem Querschnitt eine optische Schwenkeinrichtug mit einem Nickrahmen und einem Rollrahmen, wobei sich die Nickachse und die Rollachse unter einem Schnittwinkel von 45° schneiden,
- Fig. 2: einen Querschnitt durch ein Prismengelenk zur optischen Ankopplung zwischen Nick- und Rollrahmen,
- Fig. 3: das Prismengelenk gemäß Fig. 2 in einer räumlichen Darstellung und
- Fig. 4: schematisch einen Lenkflugkörper

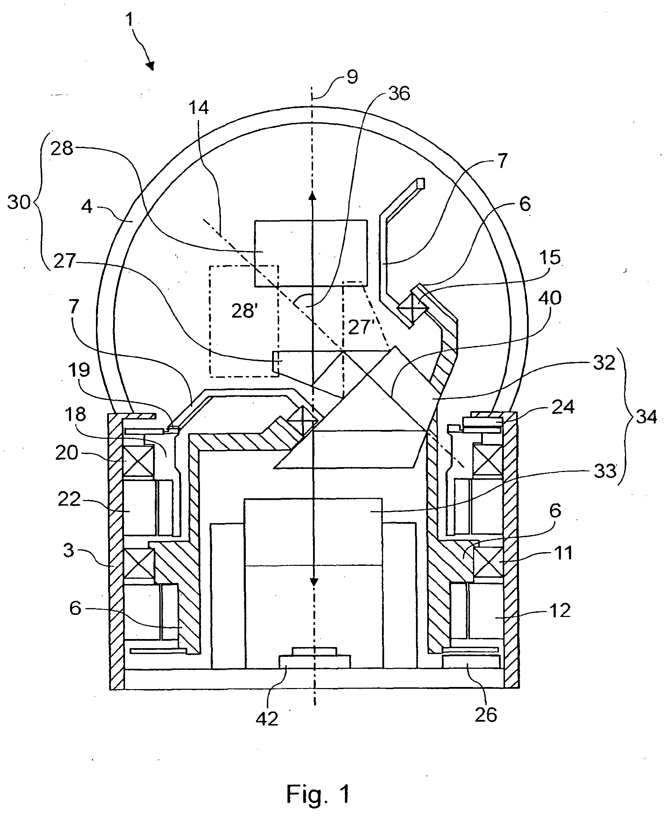

In Figur 1 ist in einem Querschnitt eine optische Schwenkeinrichtung 1 für den optischen Pfad eines Aufnahme- oder Projektionsgerätes dargestellt. Die optische Schwenkeinrichtung 1 umfasst hierbei eine Tragstruktur 3, auf der strukturfest eine transparente Kuppel 4 ruht. Im Inneren der Tragstruktur 3 ist ein Rollrahmen 6 drehbar gelagert, der einen zum Rollrahmen 6 drehbar gelagerten Nickrahmen 7 trägt.

Der Rollrahmen 6 ist gegenüber der Tragstruktur 3, um eine Rollachse 9 drehbar, mittels eines ersten Lagers 11 wie einem Kugellager gelagert. Der Rollrahmen 6 wird von einem Rollantrieb 12 angetrieben. Der Nickrahmen 7 wiederum ist gegenüber dem Rollrahmen 6, um die Nickachse 14 drehbar, mittels eines zweiten Lagers 15, insbesondere einem Kugellager, gelagert. Man erkennt deutlich, dass sich der Rollrahmen 6 mit dem darin drehbeweglich gelagerten Nickrahmen 7 insgesamt ohne Einschränkung innerhalb der Kuppel 4 verdrehen lässt. Sowohl der Nickrahmen 7 als auch der Rollrahmen 6 können vollständige Umdrehungen durchführen.

Zum Antrieb des Nickrahmens 7 ist in der Tragstruktur 3 ein koaxial zur Rolllachse 9 ausgestaltetes Koppelglied 8 in Form eines Drehkranzes vorgesehen. Das Koppelglied 18 greift zum Antrieb des Nickrahmens 7 in ein dort befestigtes Verbindungsglied 19 ein, welches ebenfalls als ein umlaufender Drehkranz ausgebildet ist. Gegenüber der Tragstruktur 3 ist das Koppelglied 18 mittels eines dritten Lagers 20, insbesondere einem Kugellager, gelagert. Das Koppelglied 18 wird von einem strukturfesten Nickantrieb 22 angetrieben.

Um eine feste Position der Schwenkeinrichtung 1, d. h. eine vorgegebene Ausrichtung des Nickrahmens 7 und des Rollrahmens 6 anzusteuern, wird der Drehwinkel des Nickrahmens 7 gegenüber einer Normposition mittels eines Winkelgebers 24 erfasst, der die Stellung des Koppelglieds 18 detektiert. Die Winkelstellung des Rollrahmens 6 wird über einen Winkelgeber 26 ermittelt. Unter Berücksichtigung der Neigung zwischen der Nickachse 14 und der Rollachse 9 kann aus der mittels der Winkelgeber 24 bzw. 26 ermittelten Winkelpositionen des Nickantriebs bzw. des Rollantriebs ein für die Abbildung bzw. Projektion vorgegebener Elevations- und Azimutwinkel angefahren bzw. eingestellt werden.

Zur Abbildung bzw. zur Projektion einer Objektszene in einem ausgewählten Raumwinkelbereich ist mit dem Nickrahmen 7 ein erstes Prisma 27 und eine Abbildungsoptik 27 fest verbunden. Das erste Prisma 27 und die Abbildungsoptik 28 bilden gemeinsam die Umlenkoptik zur Beeinflussung des Strahlenganges sowohl einlaufender wie ausgehender Strahlen. Fest mit dem Rollrahmen 6 sind weiter ein zweites Prisma 32 und eine Fokussieroptik 33 verbunden. Das zweite Prisma 32 und die Fokussieroptik 33 bilden gemeinsam die zweite Umlenkoptik 34. Die Abbildungsoptik 27 und Fokussieroptik 33 dienen der Ausrichtung des Strahlengangs zwischen der Objektseite und der Detektions- bzw. Sendeseite.

Man erkennt, dass die erste Umlenkoptik 30 und die zweite Umlenkoptik 34 über ein Prismengelenk miteinander gekoppelt sind, wobei das Prismengelenk durch das erste Prisma 27 und das zweite Prisma 32 gebildet ist. Das erste Prisma 27 ist dabei gegenüber dem zweiten Prisma 32 um die Nickachse 10 rotierbar. Zur Verdeutlichung ist gegenüber der mit durchgehenden Linien dargestellten Ausgangspositionen des ersten Prismas 27 und der Abbildungsoptik 28 deren jeweilige Position bei einer Weiterdrehung des Nickrahmens 7 um 180° gestrichelt mit eingezeichnet. Die entsprechenden Positionen des weiter gedrehten ersten Prismas und der weiter gedrehten Abbildungsoptik sind mit 27' bzw. mit 28' bezeichnet.

Bei der dargestellten Schwenkeinrichtung 1 schneiden sich die Rollachse 9 und die Nickachse 14 unter einem Winkel 36 von 45°. Dementsprechend sind die beiden eingesetzten Prismen 27 und 32 ausgestaltet, so dass ein zunächst im Inneren des zweiten Prismas 32 in Richtung der Nickachse 14 propagierender Strahl durch das erste Prisma 27 insgesamt in eine objektseitige Richtung umgelenkt wird, die sich mit der Nickachse 14 wiederum unter dem Schnittwinkel 36 schneidet. Im eingezeichneten Fall wird der von dem zweiten Prisma 32 ausgehende Strahl nach dem Übertritt in das erste Prisma 27 an einer Grenzfläche total reflektiert, gegen die gegenüberliegende Grenzfläche zurück geworfen, dort ebenfalls total reflektiert, und tritt schließlich in Richtung der Rollachse 9 aus. In umgekehrter Richtung wird ein aus dem ersten Prisma 27 austretender und im zweiten Prisma 32 entlang der Nickachse propagierender Strahl an einer Grenzfläche des zweiten Prismas 32 total reflektiert, gegen die gegenüberliegende Grenzfläche geworfen, dort wiederum total reflektiert und schließlich insgesamt in Richtung der Rollachse 9 abgelenkt. Der diesbezügliche Strahlengang 40 ist eingezeichnet.

Befindet sich das erste Prisma 27 in der gestrichelt dargestellten Position 27', so tritt ein entlang der Nickachse 14 vom zweiten Prisma 32 in das erste Prisma 27 übertretender Strahl nach zweimaliger Totalreflexion an dessen Grenzflächen - wiederum die Nickachse 14 unter einem Winkel von 45° schneidend - aus, wobei der ausgehende Strahlengang durch den Schnittpunkt zwischen Nickachse 14 und Rollachse 9 hindurchführt. Mit anderen Worten schneidet in diesem Fall der ausgehende Strahl die Rollachse 9 unter einem Winkel von 90 °.

Es wird ersichtlich, dass mit der dargestellten optischen Schwenkeinrichtung 1 eine Abbildung und/oder eine Projektion einer Objektszene aus bzw. in einem beliebigen Winkelbereich einer Hemisphäre erfolgen kann, deren Mittelpunkt durch den Schnittpunkt zwischen Rollachse 9 und Nickachse 14 gegeben ist. Zur Abbildung bzw. zur Projektion ist entlang der Rollachse 9 auf der Tragstruktur 3 eine Detektions-/Sendeeinheit 42 angeordnet.

Die Detektions-/Sendeeinheit 42 kann beispielsweise als ein CCD-Chip oder als ein Photomultiplier ausgestaltet sein, der für eine einzeln oder auch für mehrere Wellenlängen geeignet sein kann. Für eine Projektionsanwendung kann die Detektions-/Sendeeinheit 42 beispielsweise als eine Laserquelle ausgeführt werden. Weder zu einer Abbildung noch zu einer Projektion wird es notwendig, die Detektions-/Sendeeinheit 42 auf beweglichen Achsen zu positionieren. Die Detektions-/Sendeeinheit 42 ist fest mit der Tragstruktur 3 verbunden.

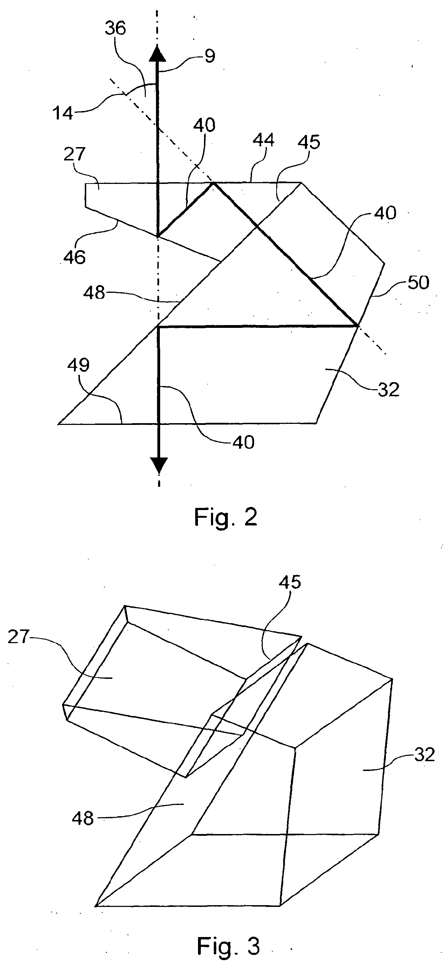

In Figur 2 ist im Schnitt das aus erstem Prisma 27 und zweitem Prisma 32 gebildete Prismengelenk gemäß Figur 1 dargestellt. Man erkennt nun, dass das erste Prisma 27 eine Basisfläche 44 aufweist, gegenüber der die erste Seitenfläche 45 und die zweite Seitenfläche 46 jeweils geneigt sind. Die erste Seitenfläche 45 ist dabei unter einem Winkel von 45° und die zweite Seitenfläche von einem Winkel von 22,5° geneigt.

Das zweite Prisma 32 umfasst eine Basisfläche 48, gegenüber welcher eine erste Seitenfläche 49 unter einem Winkel von 45° und eine zweite Seitenfläche 50 unter einem Winkel von 22.5° geneigt sind.

Zur Bildung des Prismengelenks sind das erste Prisma 27 mit seiner ersten Seitenfläche 45 und das zweite Prisma 32 mit seiner Basisfläche 48 planparallel zueinander angeordnet. Dabei ist das erste Prisma 27 um die Nickachse 14 gegenüber dem zweiten Prisma 32 drehbar. Die Rollachse 9, um die das zweite Prisma 32 drehbar gelagert ist, ist ebenfalls mit eingezeichnet.

Zur Verdeutlichung der optischen Kopplung ist in der dargestellten Drehposition des ersten Prismas 27 gegenüber dem zweiten Prisma 32 der Strahlengang 40 entlang der Rollachse 9 noch einmal eingezeichnet. Ein objektseitig entlang der Rollachse 9 eintretender Strahl tritt zunächst an der Basisfläche 44 des ersten Prismas in dieses ein und wird an der gegenüberliegenden zweiten Seitenfläche 46 total reflektiert. Der total reflektierte Strahl wird erneut gegen die Basisfläche 44 gerichtet, wo er unter einem Winkel von 45° wiederum total reflektiert wird. Der an der Basisfläche 44 totalreflektierte Strahl tritt nun unter einem Winkel von 90° gegenüber der ersten Seitenfläche 45° ohne Reflektionsverlust aus und über die Basisfläche 48 in das zweite Prisma 32 ein. Dort wird er an der zweiten Seitenfläche 50 totalreflektiert, gegen die Basisfläche 48 zurückgeworfen und dort unter einen Winkel von 45° erneut total reflektiert. Der an der Basisfläche 48 der zweiten Prismas 32 totalreflektierte Strahl ist nun in Richtung der Rollachse 9 gerichtet und verlässt das zweite Prisma 32 ohne Reflexionsverluste durch die erste Seitenfläche 49 in Richtung auf die aus Figur 1 ersichtliche Detektions-/Sendeeinheit 42. Der beschriebene optische Pfad ist unabhängig davon, ob nun ein einfallender Strahl abgebildet oder ein ausgesendeter Strahl projiziert wird.

Figur 3 zeigt das Prismengelenk gemäß Figur 2, welches aus dem ersten Prisma 27 und dem zweiten Prisma 32 gebildet ist, in einer dreidimensionalen Darstellung. Man erkennt nun deutlich die einander zugewanden Flächen der beiden Prismen 27 bzw. 32, nämlich die erste Seitenfläche 45 des ersten Prismas 27 und die Basisfläche 48 des zweiten Prismas 32.

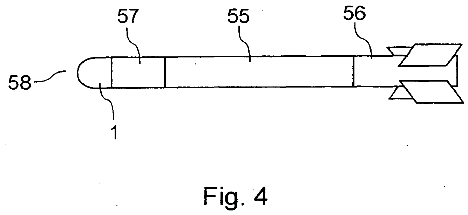

In Figur 4 ist schematisch ein Lenkflugkörper 55 dargestellt, der eine Antriebseinheit 56 und eine Steuereinheit 57 umfasst. An der Spitze des Lenkflugkörpers 55 befindet sich ein Suchkopf 58 zur Zielsuche, in den eine Schwenkeinrichtung 1 gemäß Figur 1 integriert ist. Die Schwenkeinrichtung 1 wird hierbei zu einer Erfassung von Zielen in einem großen Raumwinkelbereich eingesetzt. Dabei wird ein Spektralbereich in Infraroten erfasst und ausgewertet. Über die mittels der Detektions-/Sendeeinheit 42 (hier als ein CCD-Chip ausgebildet) erfassten Daten wird das Gesichtsfeld mittels der Steuereinheit 57 nach Zielsignaturen ausgewertet und die Antriebseinheit 56 entsprechend zur Zielverfolgung angesteuert.

### Bezugszeichenliste

- 1: Schwenkeinrichtung
- 3: Tragstruktur
- 4: Kuppel
- 6: Rollrahmen
- 7: Nickrahmen
- 9: Rollachse
- 11: erste Lager
- 12: Rollantrieb
- 14: Nickachse
- 15: zweite Lager
- 18: Koppelglied
- 19: Verbindungsglied
- 20: dritte Lager
- 22: Nickantrieb
- 24: Winkelgeber Nick
- 26: Winkelgeber Roll
- 27: erstes Prisma
- 28: Abbildungsoptik
- 30: erste Umlenkoptik
- 32: zweites Prisma
- 33: Fokussieroptik
- 34: zweite Umlenkoptik
- 36: Schnittwinkel
- 40: Strahlengang
- 42: Detektions-/Sendeeinheit
- 44: Basisfläche (erstes Prisma)
- 45: erste Seitenfläche (erstes Prisma)
- 46: zweite Seitenfläche (erstes Prisma)
- 48: Basisfläche (zweites Prisma)
- 49: erste Seitenfläche (zweites Prisma)
- 50: zweite Seitenfläche (zweites Prisma)
- 55: Lenkflugkörper
- 56: Antriebseinheit
- 57: Steuereinheit
- 58: Suchkopf

## Patentansprüche

1. Optische Schwenkeinrichtung (1) zur Abbildung und/oder Projektion einer Objektszene, mit einer Tragstruktur (3), einer in der Tragstruktur (3) angeordneten Detektions-/Sendeeinheit (42), einem Nickrahmen (7) und einem Rollrahmen (6), wobei der Nickrahmen (7) um eine Nickachse (14) drehbar in dem Rollrahmen (6) und der Rollrahmen (6) um eine Rollachse (9) drehbar in der Tragstruktur (3) gelagert ist, wobei sich die Nickachse (14) und die Rollachse (9) unter einem Schnittwinkel (36) schneiden, einer in dem Nickrahmen (7) angeordneten ersten Umlenkoptik (30) derart, dass ein entlang der Nickachse (14) propagierender Strahl in eine objektseitige Richtung umgelenkt wird, die die Nickachse (14) unter dem Schnittwinkel (36) schneidet, und umgekehrt, und einer zweiten in dem Rollrahmen (6) angeordneten Umlenkoptik (34) derart, dass ein entlang der Nickachse (14) propagierender Strahl in Richtung entlang der Rollachse (9) und umgekehrt umgelenkt wird, wobei die erste und die zweite Umlenkoptik (30 bzw. 34) zur Umlenkung der Strahlen jeweils ein Prisma (27 bzw. 32) umfassen,
**dadurch gekennzeichnet,**
**dass** der Schnittwinkel (36) weniger als 90° ist und dass die Prismen (27,32) derart ausgebildet und angeordnet sind, dass sie jeweils eine geradzahlige Anzahl, insbesondere zwei, an Reflexionsflächen aufweisen.

2. Schwenkeinrichtung (1) nach Anspruch 1,
**dadurch gekennzeichnet,**
**dass** sich die Nickachse (14) und die Rollachse (9) unter einem Winkel von 45° schneiden.

3. Schwenkeinrichtung (1) nach Anspruch 1 oder 2,
wobei die beiden Prismen (27,32) jeweils eine erste (45 bzw. 49) und eine zweite Seitenfläche (46 bzw. 50) sowie eine Basisfläche (44 bzw. 48) aufweisen, wobei die erste Seitenfläche (45 bzw. 49) zur Basisfläche (44 bzw. 48) um den Schnittwinkel (36), insbesondere 45°, und die zweite Seitenfläche (46 bzw. 50) zur Basisfläche (44 bzw. 48) um den halben Schnittwinkel (36), insbesondere 22,5°, geneigt ist, und dass die Prismen (27,32) mit einer ersten Seitenfläche (45) und mit einer Basisfläche (48) zueinander planparallel angeordnet sind.

4. Schwenkeinrichtung (1) nach einem der vorhergehenden Ansprüche, wobei die erste und/oder die zweite Umlenkoptik (30 bzw. 34) zur Ausgestaltung eines reellen Zwischenbildes, insbesondere innerhalb der Prismen (27,32), ausgebildet ist/sind.

5. Schwenkeinrichtung (1) nach einem der vorhergehenden Ansprüche, wobei der Nickrahmen (7) ein Verbindungsglied (19) aufweist, in welches zum Antrieb ein strukturfestes, drehbares Koppelglied (18) eingreift.

6. Schwenkeinrichtung (1) nach einem der vorhergehenden Ansprüche, wobei eine strukturfeste, hermetisch gegenüber der Tragstruktur (3) abgedichtete, transparente Kuppel (4) vorgesehen ist, die den Nickrahmen (7) und den Rollrahmen (6) abschliesst.

7. Schwenkeinrichtung (1) nach einem der vorhergehenden Ansprüche wobei sie in einem Suchkopf (58) eines Lenkflugkörpers (55) eingesetzt ist.

## Claims

1. Optical swivelling device (1) for imaging and/or projection of an object scene, having a supporting structure (3), a detection/transmission unit (42) arranged in the supporting structure (3), a pitch frame (7) and a roll frame (6), with the pitch frame (7) being mounted in the roll frame (6) such that it can rotate about a pitch axis (14) and with the roll frame (6) being mounted in the supporting structure (3) such that it can rotate about a roll axis (9), with the pitch axis (14) and the roll axis (9) intersecting at an intersection angle (36), first deflection optics (30) arranged in the pitch frame (7) such that a beam propagating along the pitch axis (14) is deflected in an object-side direction which intersects the pitch axis (14) at the intersection angle (36), and vice versa, and second deflection optics (34) arranged in the roll frame (6) such that a beam propagating along the pitch axis (14) is deflected in the direction along the roll axis (9), and vice versa,
wherein
the first and the second deflection optics (30 or 34, respectively) each comprise a prism (27 or 32, respectively) for deflection of the beams, **characterized**
**in that** the intersection angle (36) is less than 90° and in that the prisms (27, 32) are designed and arranged such that they each have an even number of reflection surfaces, in particular two reflection surfaces.

2. Swivelling device (1) according to Claim 1,
**characterized in that**
the pitch axis (14) and the roll axis (9) intersect at an angle of 45°.

3. Swivelling device (1) according to Claim 1 or 2,
wherein the two prisms (27, 32) each have a first (45 or 49, respectively) and a second (46 or 50, respectively) side surface, as well as a base surface (44 or 48, respectively), with the first side surface (45 or 49, respectively) being inclined at the intersection angle (36), in particular 45°, to the base surface (44 or 48, respectively), and with the second side surface (46 or 50, respectively) being inclined at half the intersection angle (36), in particular 22.5°, to the base surface (44 or 48, respectively), and in that the prisms (27, 32) are aligned with a first side surface (45) and with a base surface (48) plane-parallel to one another.

4. Swivelling device (1) according to one of the preceding claims,
wherein the first and/or the second deflection optics (30 and 34, respectively) is/are designed to produce a real intermediate image, in particular within the prisms (27, 32).

5. Swivelling device (1) according to one of the preceding claims,
wherein the pitch frame (7) has a connecting element (19) in which a coupling element (18) engages for drive purposes, is fixed to the structure and can rotate.

6. Swivelling device (1) according to one of the preceding claims,
wherein a transparent dome (4) is provided, is fixed to the structure, is hermetically sealed with respect to the supporting structure (3) and closes the pitch frame (7) and the roll frame (6).

7. Swivelling device (1) according to one of the preceding claims,
wherein the swivelling device (1) is used in a homing head (58) of a guided missile (55).

## Revendications

1. Dispositif de pivotement optique (1) destiné à former l'image et/ou effectuer la projection d'une scène d'objet, comportant une structure de support (3), une unité de détection/émission (42) disposée dans la structure de support (3), un châssis de tangage (7) et un châssis de roulis (6), dans lequel le châssis de tangage (7) est monté tournant autour d'un axe de tangage (14) dans le châssis de roulis (6) et le châssis de roulis (6) est monté tournant autour d'un axe de roulis (9) dans la structure de support (3), dans lequel l'axe de tangage (14) et l'axe de roulis (9) se coupent sous un angle d'intersection (36), une première optique de déviation (30) disposée dans le châssis de tangage (7) de manière à ce qu'un faisceau se propageant le long de l'axe de tangage (14) soit dévié dans une direction orientée vers l'objet qui coupe l'axe de tangage (14) sous l'angle d'intersection (36) et inversement, et une deuxième optique de déviation (34) disposée dans le châssis de roulis (6) de manière à ce qu'un faisceau se propageant le long de l'axe de tangage (14) soit dévié dans une direction orientée le long de l'axe de roulis (9) et inversement, dans lequel les première et deuxième optiques de déviation (30 ou 34) comprennent respectivement un prisme (27 ou 32) destiné à dévier le faisceau, **caractérisé en ce que** l'angle d'intersection (36) est inférieur à 90° et **en ce que** les prismes (27, 32) sont conçus et agencés de manière à ce qu'ils présentent respectivement un nombre pair de surfaces de réflexion, notamment deux.

2. Dispositif de pivotement (1) selon la revendication 1,
**caractérisé en ce que** l'axe de tangage (14) et l'axe de roulis (9) se coupent sous un angle de 45°.

3. Dispositif de pivotement (1) selon la revendication 1 ou 2,
dans lequel les deux prismes (27, 32) présentent respectivement une première (45 ou 49) et une deuxième (46 ou 50) surface latérale ainsi qu'une surface de base (44 ou 48), dans lequel la première surface latérale (45 ou 49) est inclinée par rapport à la surface de base (44 ou 48) de l'angle d'intersection (36), notamment de 45°, et la deuxième surface latérale (46 ou 50) est inclinée par rapport à la surface de base (44 ou 48) de la moitié de l'angle d'intersection (36), notamment de 22,5°, et dans lequel les prismes (27, 32) ayant une première surface latérale (45) et une surface de base (48) sont disposés de manière plan-parallèle l'un par rapport à l'autre.

4. Dispositif de pivotement (1) selon l'une quelconque des revendications précédentes,
dans lequel la première et/ou la deuxième optique de déviation (30 ou 34) est/sont conçue(s) de manière à former une image intermédiaire réelle, notamment à l'intérieur des prismes (27, 32).

5. Dispositif de pivotement (1) selon l'une quelconque des revendications précédentes,
dans lequel le châssis de tangage (7) comprend un élément de liaison (19) dans lequel s'engage un élément d'accouplement tournant de structure rigide (18) à des fins d'entraînement.

6. Dispositif de pivotement (1) selon l'une quelconque des revendications précédentes,
dans lequel il est prévu une coupelle (4) de structure rigide, étanchéifiée de manière hermétique par rapport à la structure de support (3) et transparente qui ferme le châssis de tangage (7) et le châssis de roulis (6).

7. Dispositif de pivotement (1) selon l'une quelconque des revendications précédentes,
celui-ci étant inséré dans une tête chercheuse (58) d'un missile (55).
